Europäisches Patentamt

European Patent Office

Office européen des brevets

(19)

(11) Publication number: **0 424 907 A2**

## (12) EUROPEAN PATENT APPLICATION

(21) Application number: 90120405.7

(22) Date of filing: 24.10.90

(51) Int. Cl.⁵: **H04Q 9/14**, G08C 25/00, B60R 16/02

(30) Priority: 24.10.89 JP 274797/89
25.10.89 JP 276005/89

(43) Date of publication of application:
02.05.91 Bulletin 91/18

(84) Designated Contracting States:
DE GB

(71) Applicant: NISSAN MOTOR CO., LTD.
No.2, Takara-cho, Kanagawa-ku
Yokohama-shi Kanagawa-ken 221(JP)

(72) Inventor: Yoshida, Kiyoshi
12-7, Shonandai 1-chome
Fujisawa-shi, Kanagawa-ken(JP)
Inventor: Sakagami, Atsushi
Palace-three, 18-2, Aizawa 1-chome, Seya-ku
Yokohama-shi, Kanagawa-ken(JP)

(74) Representative: Patentanwälte Grünecker,
Kinkeldey, Stockmair & Partner
Maximilianstrasse 58
W-8000 München 22(DE)

(54) System and method for communicating data between master and slave stations utilizing time division multiplex mode with failsafe provision applicable to automotive vehicles.

(57) A system and method for communicating data between a plurality of data processing stations in a time division multiplexing mode with failsafe structure are disclosed wherein, when either a master station or a reception portion of a particular slave station detects an abnormality in data transmission or in operation of a particular operation portion, either master station or reception portion transmits an error signal to the reception portion or to a driving portion for driving the corresponding terminal so that the operation of the corresponding terminal is halted or the operation thereof is fixed at a safest mode or position. In addition, when the terminal is operated in the fixed state when the vehicle is unoccupied, the terminal is forcibly turned off to reduce power consumption.

FIG.1

EP 0 424 907 A2

# SYSTEM AND METHOD FOR COMMUNICATING DATA BETWEEN MASTER AND SLAVE STATIONS UTILIZING TIME DIVISION MULTIPLEX MODE WITH FAILSAFE PROVISION APPLICABLE TO AUTOMOTIVE VEHICLES

## BACKGROUND OF THE INVENTION

### (1) Field of the invention:

The present invention relates generally to a system and method for communicating data between master and slave stations utilizing a time division multiplex mode applicable to an automotive vehicle which includes a failsafe provision to insure proper operation of the system.

### (2) Background art:

Recently, A wide variety of electronic apparatus have been used in automotive vehicles. Along with the development of these electronic apparatus, the number of connection lines (i.e., wire harnesses) connected between the necessary plurality of terminals and respective operation portions (switches etc.), have increased. The increase in the number of wire harnesses causes the weight and complexity of wiring to be increased and further, system reliability is reduced.

Therefore, various types of so-called multiplex transmission systems which can transmit bits of information related to operations of great number of operation portions via fewer connection lines have been proposed. Such multiplex transmission systems are exemplified by United States Patents No. 4, 809, 266 issued on February 28, 1989, No. 4, 926, 417 issued on May 15, 1990, and No. 4, 821, 262 issued on April 11, 1989.

Another previously proposed multiplex transmission systems, transmitting means for transmitting information related to operations of the respective operation portions installed so as to correspond to the plurality of terminals and driving means for driving the corresponding terminal in response to the information received from the corresponding operation portion and related to the operation carried out by the corresponding operation portion are provided therein. In addition, a parity bit is added to the information transmitted from the operation portion in order to execute a parity check to improve reliability of a communication when the information related to the operation of the operation portion is transmitted via the connection line.

When the information related to the operation of the operation portion is transmitted or received, the parity check is carried out to detect possible communication error, e.g., when the connection line is broken or information is changed due to electromagnetic noise.

However, in the previously proposed data communicating system, in a case where the communication error occurs during operation of the vehicle, for example, data transmitted immediately before the communication error occurs is held by a slave station (a station containing a plurality of terminals corresponding to one or more operation portions and sometimes including one or more operation portions) without modification so that a desired terminal cannot be operated even if the corresponding operation portion is operated.

## SUMMARY OF THE INVENTION

It is an object of the present invention to provide a system and method, applicable to an automotive vehicle, for communicating data between the master and slave stations using a time division multiplex mode, in which the desired terminal can be driven even if a communication error occurs during operation of the vehicle.

The above-described object can be achieved by providing a time division multiplex transmitting system, comprising: a) a master station for sequentially acccessing a plurality of slave stations, each slave station having a transmitting/receiving portion, at least one operation portion and a plurality of terminals and for transmitting a required information to any of the slave stations on the basis of the information received from one accessed station; b) a transmission line connected between the master station and the plurality of slave stations for transmitting the information between the master station and slave stations; c) first means for detecting a communication error occurring during the communication between one of the slave stations and the master station; and d) second means for providing a fail safe structure for the system so as to provide a desired operation for the accessed slave station when the communication error occurs.

The above-described object can also be achieved by providing a time division multiplexing communication system, comprising: a) a master station for sequentially accessing a plurality of slave stations, each slave station having a data transmitting/receiving portion, at least one operation portion and a plurality of terminals and for transmitting a required data to another accessed slave station on the basis of the data received from one accessed slave station; b) a data transmission line connected between the master station and the plurality of slave stations for providing the data transmission path between the master station and the slave stations; c) first means for detecting at least one erroneous operation in one of the operation portions arranged in a particular slave station and transmission error which occurs data transmission via the data transmission line; and d) second means for causing the terminals of the accessed slave station which carry out desired operations in reponse to the operations of the operation portions to be halted or to be operated so as to be fixed in a safest mode for at least one of the erroneous operation.

The above-described object can also be achieved by providing a method for communicating data between a plurality of data stations in a time division multiplexing mode, comprising the steps of: a) sequentially acccessing a plurality of slave stations, each slave station having a transmitting/receiving portion, at least one operation portion and a plurality of terminals and for transmitting a required information to any of the slave stations on the basis of the information received from one accessed station; b) transmitting the information between the master station and slave stations; c) detecting a communication failure as an error in communication occurred during communication of information between the slave station and the master station; and d) providing a failsafe structure for the system so as to provide a desired operation for the accessed slave station when the communication error occurs.

BRIEF DESCRIPTION OF THE DRAWINGS:

Fig. 1 is a circuit block diagram of a time division multiplex communicating system applicable to an automotive vehicle in a preferred embodiment according to the present invention;

Fig. 2 is an explanatory diagram of a data format used in the preferred embodiment shown in Fig. 1.

Fig. 3 is a partial circuit block diagram indicating two slave stations addressed in Fig. 2.

Fig. 4 is an explanatory table indicating logic values of respective parts shown in Fig. 3.

Fig. 5 is a partial circuit block diagram indicating two slave stations of a second preferred embodiment according to the present invention.

Fig. 6 is a circuit block diagram of a whole time division multiplex communicating system shown in Fig. 5.

Fig. 7 is a partial circuit block diagram of two slave stations of a third preferred embodiment according to the present invention.

Fig. 8 is a circuit block diagram of a fourth preferred embodiment according to the present invention.

Fig. 9 is a partial circuit block diagram indicating an internal structure of a slave station shown in Fig. 8.

Fig. 10 is a circuit block diagram of an internal circuit of a slave station shown in Fig. 8.

Fig. 11 (A) is a circuit block diagram of the fifth preferred embodiment according to the present invention.

Fig. 11 (B) is a circuit block diagram of a master station and two slave stations of the fifth preferred embodiment according to the present invention as shown in Fig. 11 (A).

Fig. 12 is an explanatory table indicating logic values of the operational states of respective operation portions shown in Fig. 11.

Fig. 13 is an operational flowchart of a control routine of the fifth preferred embodiment shown in Fig. 11.

Figs. 14 and 15 are explanatory views indicating operations according to the fifth preferred embodiment shown in Fig. 11.

Fig. 16 is a circuit block diagram of a master station and three slave stations shown in Fig. 11.

Fig. 17 is an explanatory table indicating conditions and control processing to determine an unmanned state of a vehicle on the basis of the operating states of the plurality of operation portions shown in Fig. 16.

Fig. 18 is a signal timing chart indicating operations carried out in the fifth preferred embodiment shown in Fig. 17.

DETAILED DESCRIPTION OF THE PREFERRED EMBODIMENTS:

Reference will hereinafter be made to the drawings in order to facilitate a better understanding of the present invention.

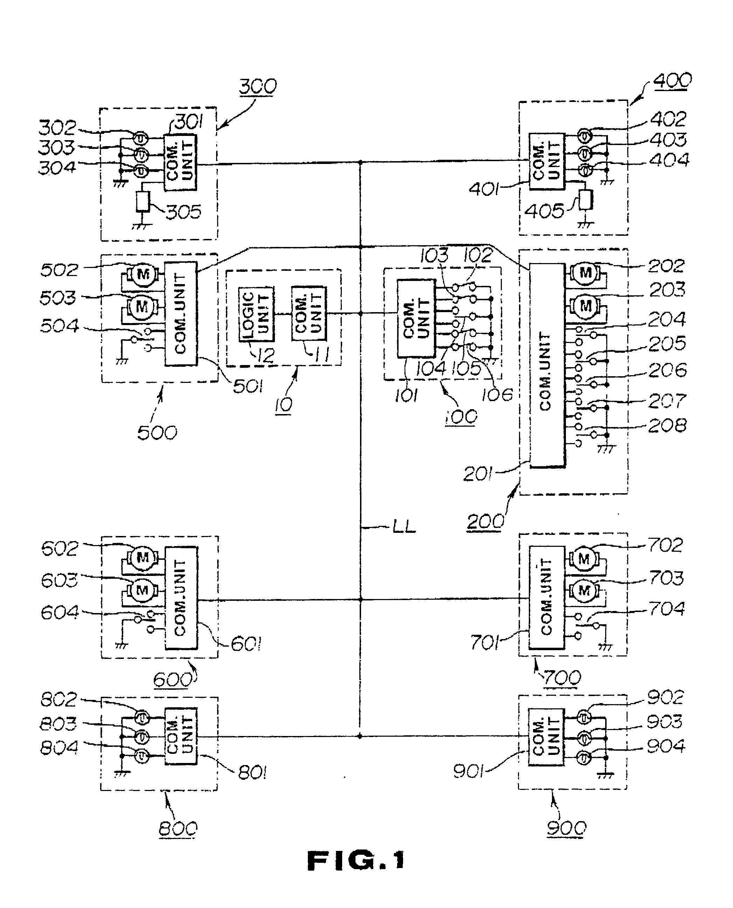

Fig. 1 shows an overall structure of a time division multiplex transmission system in a first preferred embodiment according to the present invention.

It is noted that a structure of the time division multiplexing communication system according to the present invention is exemplified by a United States Patent Application, titled SYSTEM AND METHOD APPLICABLE TO AUTOMOTIVE VEHICLES UTILIZING TIME DIVISION MULTIPLEX MODE FOR COMMUNICATING DATA BETWEEN MASTER AND SLAVE STATIONS, having priority dates of October 23, 1989, and October 24, 1989, the disclosure of which is hereby incorporated by reference.

A plurality of slave stations 100, 200, 300, 400, ---, 900 are connected to a master station 10 via a multiplex data transmission line LL, respectively.

The master station 10 includes a communication portion 11 constituted by an IC which performs polling of the plurality of slave stations to communicate with each slave station and a logic portion constituted by an IC which performs control over a corresponding terminal on the basis of information collected via the multiplex transmission line LL.

A salve station 100 includes a communication portion 101 to communicate with the master station 10 and a plurality of operation portions.

The plurality of operation portions will be described below.

The communication portion 101 is connected with a small lamp (e.g. parking lamp or side lamp) switch 102 to turn on or off an illumination lamp of a measuring instrument, a head lamp switch 103 to turn on or off the head lamp, a turn signal switch 104, a hazard switch 105, and horn switch 106.

Slave station 200 includes a communication portion 201 to communicate with the master station 10, a plurality of terminals, and a plurality of operation portions. Specifically, two terminals of a power window motor 202 and door lock motor 203 are connected to the communication portion 201. The plurality of operation portions include a switch 204 for operatively driving a power window at a driver's seat position, a switch 205 for operatively driving a power window at a passenger's seat position, a switch 206 for operatively driving a power window on a rear right side, a switch 207 for operatively driving a power window on a rear left side, and a switch 208 for operatively driving a door locking system. These operation portions are connected to the communication portion 201.

Slave station 300 includes a communication portion 301 to communicate with the master station 10 and a plurality of terminals. The terminals include a small lamp 302 installed on a front left side of the vehicle, a left head lamp 303, a left turn signal lamp 304, and a a power antenna 305. The terminals are connected to the communication portion 301.

The slave station 400 includes a communication portion 401 to communicate with a master station 10 and a plurality of terminals installed on a front right side of the vehicle. The terminals include a small lamp 402, a right head lamp 403, turn right signal lamp 404, and a horn 405. These terminals are connected to the communication portion 401.

Slave station 500 includes a communication portion 500 to communicate with the master station 10, a plurality of terminals installed at the passenger seat position, and a plurality of operation portions corresponding to the respective terminals thereof. That is to say, the commuinication portion 501 is connected with a power window motor 502 and a door locking motor 503. A switch 504 is connected with the communication portion 501 for operatively driving the power window motor 502.

The slave station 600 includes a communication portion 601 to communicate with the master station 10, a plurality of terminals installed on a rear left side and corresponding operation portions. That is to say, a power window motor 602 and door locking motor 603 are connected with the communication portion 601. A switch 604 for driving the power window motor 602 is connected with the communication portion 601.

Slave station 700 includes a communication portion 701 for communicating with the master station 10, a plurality of terminals installed on a rear right side, and corresponding operation portions. Specifically, a power window motor 702 and a door locking motor 703 are connected to the communication portion 701. A switch 704 for operatively driving the power window motor 702 is connected to the communication portion 701.

Slave station 800 includes a communication portion 801 and a plurality of terminals installed on a rear left side of the vehicle. The communication portion 801 is connected with a tail lamp 802, a turn signal lamp 803, and a licence lamp 804.

Slave station 900 includes a communication portion 901 to commmunicate with the master station 10 and a plurality of terminals installed on a rear right side of the vehicle. The communication portion 901 is connected to a tail lamp 902, a turn signal lamp 903, and a licence lamp 904.

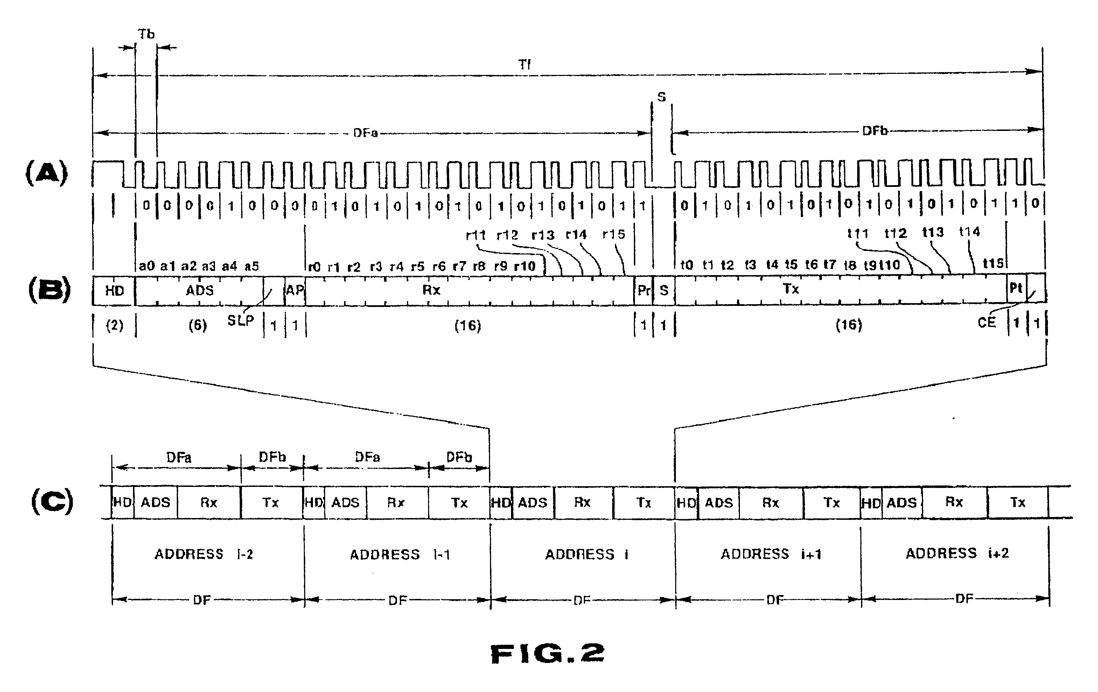

Next, a data format used in a basic operation of the multiplex transmission system shown in Fig. 1 will be described with reference to Fig. 2.

A prespecified address 100, 200, 300, 400, 500, ---, 900 is allocated to each slave station. When the allocated address is specified, the slave station can be identified. Each slave station monitors address information transmitted from the master station 10. When the specified address coincides with its own address, the slave station returns an information DFb, as will be described later, to the master station 10.

As shown in Fig. 2 (C), a data format DF is set for the respective slave stations having the addresses i - 2, i - 1, i, i + 1, i + 2. The data format DF is formed with information DFa to be transmitted from the master station 10 to the slave station and information DFb to be transmitted from the slave station to the master station 10.

As an example, the data format DF for the particular slave station having the address i will be described below.

As shown in Fig. 2· (B), the information DFa includes a header signal HD of 2 bits representing a start of data: an address information ADS having a six-bit address a0, a1, a2, a3, a4, and a5, a sleep bit SLP used to halt the operation of the slave station , a one-bit parity bit AP, a drive information Rx having a 16-bit data bits r0, r1, r2, ---, r15, and a one-bit parity bit Pr. The information DFb includes an operation information Tx constituted by a 16-bit data bits t0, t1, t2, ---, t15, a one-bit parity bit Pt, and a one-bit error bit CE. A switching time S is set for switching a communication circuit between the information DFa and information DFb. During the switching time S, no communication is performed.

Each unit bit forming each kind of information is generated using a pulse width modulation method as shown in Fig. 2 (A).

A bit time Tb of each unit bit is set, e.g., at 70 microseconds. A data time Tf for each data format is set, e.g., at 3.5 milliseconds.

Next, an operation of the preferred embodiment shown in Fig. 1 in a case, e.g., where the small lamp switch 102 belonging to the slave station 100 is turned on will be described below.

First, the master station 10, in order to require the information related to the operation, transmits a header signal HD, address information ADS of the slave station 100, the sleep bit SLP, the parity bit AP, the drive information Rx (information DFa) to the slave station 100. At this time, their respective data bits r0, r1, r2, ---, r15 related to the control information are set to the logic value of 0 and the parity bit Pr is set to the logic value of 1.

The slave station 100 transmits the information DFb constituted by the operation information Tx, parity bit Pt, and the error bit CE to the master station 10 after the lapse of the switching time S. At this time, in a case where the information related to the operation of the small lamp switch 102 corresponds to the data bit t0, the data bit t0 is set to the logic value 0 and the other data bits t1, t2, t3, ---, t15 are set to the logic value of 1. In addition, the parity bit Pt and error bit CE are set to the logic values of 0.

The master station 10 receives the information DFb from the slave station 100 and, then, interprets the operation information Tx. Since the data bit t0 indicates the logic value of 0, the master station 10 determines that the small lamp 102 has been turned on. Thereby, the master station 10 determines that the corresponding terminals, i.e., small lamp 302 of the slave station 300, small lamp 402 of the slave station 300, the small lamp 402 of the slave station 400, the tail lamp 802 and licence lamp 402 of the slave station 800, and tail lamp 902 and licence lamp 904 of the slave station 900 should be turned on, respectively.

The master station 10 transmits the information DFa including the drive information Rx that the tail lamp 302 is to be turned on to the slave station 300. At this time, in a case where the data bit r0 corresponding to the small lamp 302 is allocated, the data bit r0 is set to the logic value of 0 and the other data bits r1, r2, r3, ---, r15 are set to the logic value 1.

When the slave station 300 receives the information DFa from the master station 10, the master station 10 interprets the drive information Rx. When the master station 10 detects that only the data bit r0 is set to the logic value of 0, the master station determines that it is a turn on command to the small lamp 302. The slave station 300 turns on the small lamp 302. Subsequently, when the switching time S is passed upon receipt of the information DFa from the master station 10, the slave station 300 transmits the information Dfb to the master station 10. Since the slave station 300 has no operation portion, the logic values of the data bits t0, t1, t2, ---, t15 are set to "1".

In the same way as described below, the master station 10 transmits the information DFa that the small lamp 402 is to be turned on to the slave station 400.

The master station 10 transmits the information DFa that the tail lamp 802 and licence lamp 804 are to be turned on to the slave station 800 and transmits the information DFa that the tail lamp 902 and licence lamp 904 are to be turned on to the slave station 900. Thus, the tail lamp 802, licence lamp 804, tail lamp 902, and licence lamp 904 are respectively tunred on.

Next, an operation in a case where the switch 207 is operated in order to lower the power window located on the rear left side will be described below.

The master station 10 transmits the information DFa including the drive information Rx having logic values of 0s for all data bits r0, r1, r2, ---, R15 in order to require information related to the operation to the slave station 200.

After the switching time S upon receipt of the information DFa, the slave station 200 transmits the information DFb including the operation information TX that the switch 207 has been operated to the master station 10. At this time, in a case where the information related to the operation of the switch 207 is allocated to the data bit t7, only the bit t7 is set to the logic value of 0 and the other data bist t1, t2, t6, t8, --, t15 are set to the logic values of 1.

When the master station 10 receives the information DFb from the slave station 200, the master station 10 interprets the operation information Tx. When the master station 10 detects that the data bit t7 indicates the logic value of 0, it determines that the switch 207 has been operated. Thus, the master station 10 transmits the information DFa including the information Rx that the left rear power window is to be lowered. In a case where the drive information to lower the window glass located on the rear left side is allocated to correspond to the data bit r1, the data bit r1 is set to the logic value of 0 and the other data bits are set to the logic value of 1.

When the slave station 600 receives the information DFa from the master station 10, the slave station 600 interprets the drive information Rx. When the slave station 600 determines that the logic value of the data bit r1 is at the value of 0, the power window motor 602 is driven so that the window glass located on the rear left side is lowered. Next, after the switching time S is passed upon receipt of the information DFa from the master station, the slave station 600 transmits the information DFb including the operation infomration Tx in which all data bits are constituted by the logic values of 1 to the master station 10.

As described above, the master station 10 performs polling of each of the slave stations to collect the information derived from each slave station and transmits the drive information to the allocated slave stations having terminals corresponding to the collected information to drive the terminals.

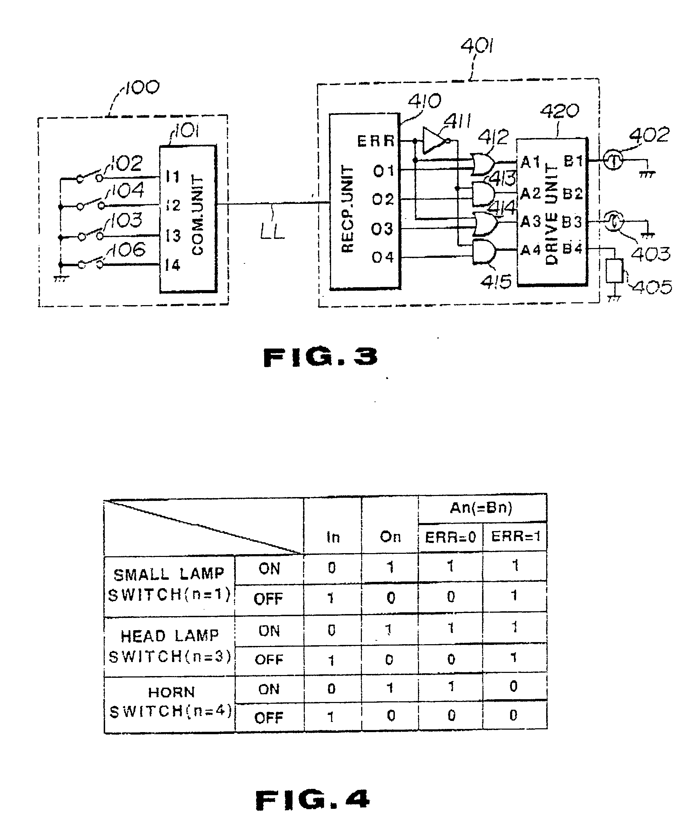

Next, an internal structure of the communication portion 401 will be described below with reference to Fig. 3.

The communication portion 401 includes a reception portion 410, an inverter 411, OR gate circuits 412, 414, AND gate circuits 413, 415 and a drive portion 420. The reception portion 410 includes an error terminal ERR and output terminals O1, O2, O3, and O4. It is noted that an input terminal of the communication portion 410 is connected to a plurality of slave stations 100, 200, ---, 900 via the multiplex transmission line LL. The drive portion 420 is provided with input terminals A1, A2, A3, A4 and output terminals B1, B2, B3, B4. The output terminal B1 is connected to the small lamp 402. The output terminal B3 is connected to the head lamp 403. In addition, the output terminal B4 is connected to the horn 405.

Next, an action of the preferred embodiment shown in Fig. 3 will be described with reference to Fig. 4.

First, the operation of the multiplex transmission system when normally operated, i.e., in a case when the error terminal ERR of the reception portion 410 indicates the logic value of 0 will be described below.

If, in the slave station 100, the small lamp switch 102, head lamp switch 103 and the horn switch 106, for example, have been operated, the logic values of 0 are provided on corresponding input terminals I1, I3, and I4 of the communication portion 101.

When the master station 10 performs polling of the slave station 100 to collect the operation information of the slave station 100, the master station 10 determines that the small lamp switch 102, head lamp switch 103, and horn switch 106 have been operated. In this way, the master station 10 performs sequential polling of the slave stations 300, 400, 800, and 900 and sequentially transmits drive information to drive the respective terminals, i.e., small lamp 302, head lamp 303, small lamp 402, head lamp 403, the horn 405, tail lamp 802, licence lamp 804, tail lamp 902, and licence lamp 904.

Thus, the vehicle apparatus associated with the respective terminals described above are activated.

Next, an operation when the multiplex transmission line LL is broken or data error occurs due to, for example, electromagnetic noise so that a communication error occurs, will be described below.

For example, in a case where a communication error occurs between the master station 10 and slave station 400, the reception portion 410 executes the parity check. For example, when the parity bit is not odd, the reception portion 10 determines that a communication error has occured and outputs the logic value of 1 from the error terminal ERR.

The logic value 1 is provided for the input terminal A1 of the drive portion 420 via the OR gate circuit 412 and simultaneously the logic value of 1 is provided for the input terminal A3 via the OR gate circuit 414. Hence, both output terminals B1 and B2 of the drive portion 420 output logic values of 1 to forcibly turn on the small lamp 402 and head lamp 403. Since the logic value of 0 is output from the inverter 411, the horn 405 is turned off via the OR gate circuit 415.

An internal structure of the reception portion 401 shown in Fig. 3 is the same as the reception portion 301 of the slave station 300. In a case where communication error occurs, the small lamp 302 and head lamp 303 are forcibly turned on.

The internal structure of the communication portion 401 shown in Fig. 3 is the same as that of the communication portions 801 and 901. If communication error occurs, the tail lamps 802, 902 and licence lamps 804, 904 are all forcibly turned on.

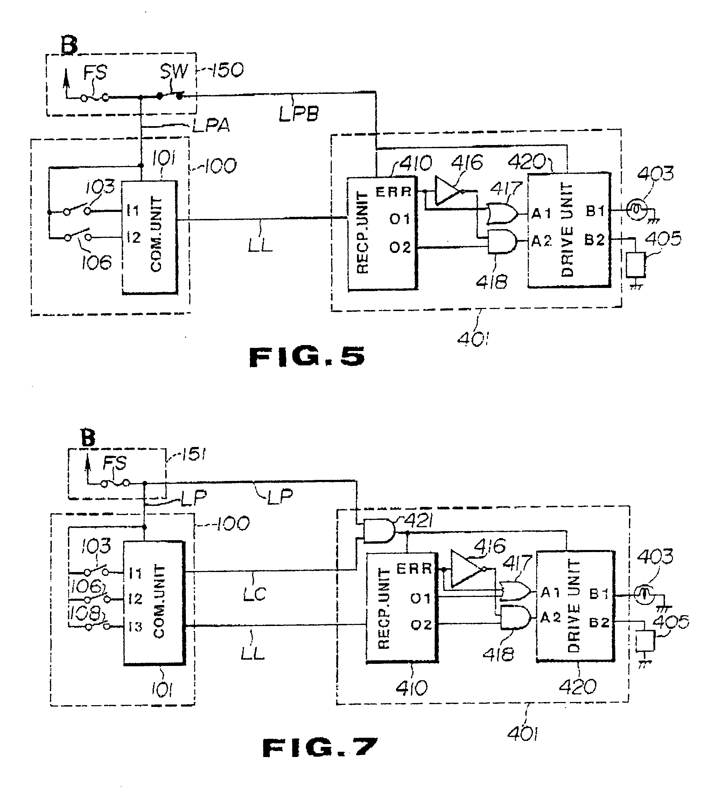

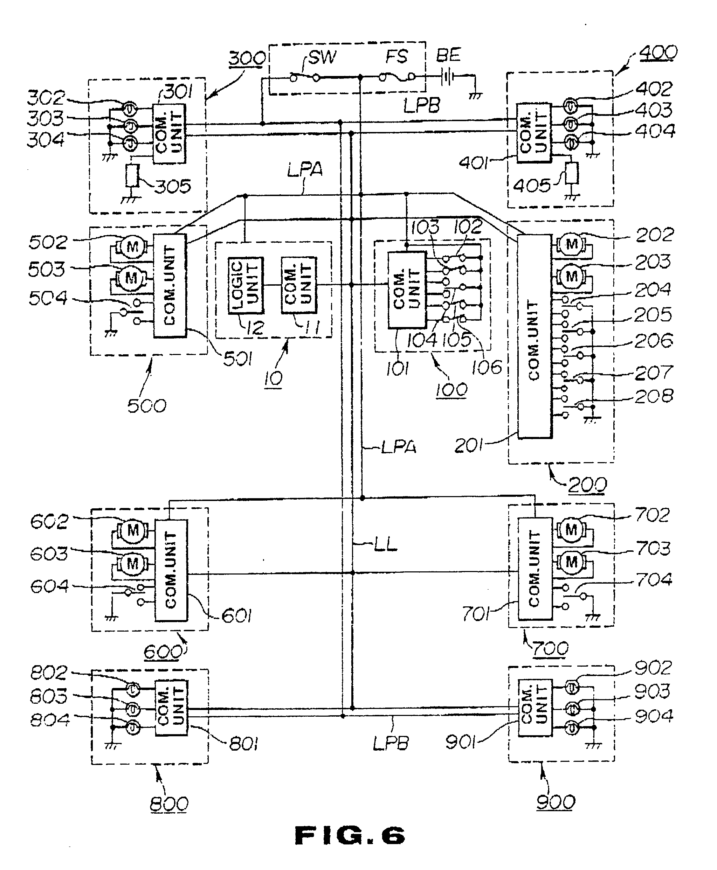

Figs. 5 and 6 show a second preferred embodiment of the time division multiplex transmission system according to the present invention.

In the second preferred embodiment shown in Figs. 5 and 6, a power supply control portion 150 is installed so that reduced battery consumption can be achieved during the occurrence of communication error.

Specifically, a power supply derived from a battery B is connected to the slave station 100 via a fuse FS and power supply line LPA. The power supply line LPA is connected to the master station 10, slave stations 200, 500, 600, and 700, respectively. In addition, the power supply derived from the battery B is connected to the communication portion 401 via a fuse FS, a switch SW installed on a fuse box, and reception portion power supply line LPB. The reception power supply LPD is connected to the communication portions 301, 801, 901. Hence, the power supply from the battery B via the normally closed contact switch SW is supplied to the communication portions 301, 401, 801, and 901, respectively. The communication portion 401 includes the reception portion 410, inverter 416, OR gate circuit 417, AND gate circuit 418, and drive portion 420.

If a communication error occurs, the terminals having high priority, i.e., head lamps 303, 403, small lamps 302, 402, tail lamps 802, 902, and the licence lamps 804, 904 are forcibly turned on. Even if such a forcibly turned on state is continued and held, the power supply to each of the communication portions 301, 401, 801, and 901 of each slave station 300, 400, 800, and 900 is interrupted when the driver turns off the switch SW upon the end of vehicle operation so that each terminal which has been forcibly turned on can be extinguished. Thus, the power supply consumption of the battery B can be reduced.

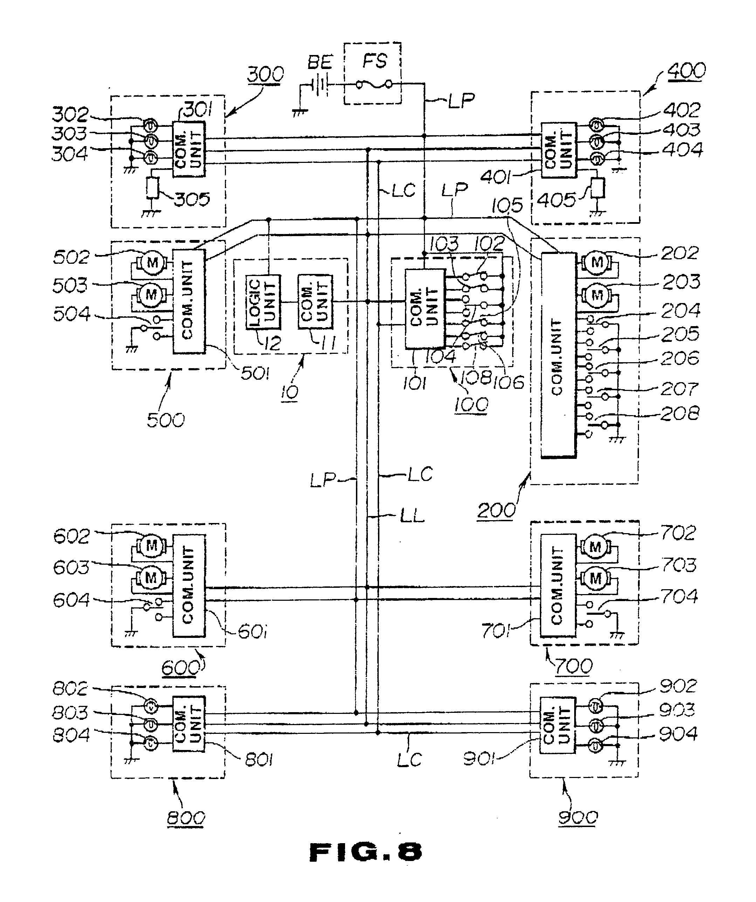

Figs. 7, 8, 9, and 10 show a third preferred embodiment of the multiplex transmision system according to the present invention.

In the third preferred embodiment, when commuciation error occurs and the terminals having high priority are forcibly turned on, a key switch may be operated to turn them off, the forcibly turned lamps are turned off so that the power supply of the battery can be reduced.

As shown in Fig. 8, the battery BE is connected to the master station 10 and slave stations 100, 200, 300, ---, 900 via the fuse FS and reception portion power supply line LP. A power supply control line LC lead from the communication portion 101 of the slave station 100 is connected to the respective communication portions 301, 401, 801, and 901 of the slave stations 300, 400, 800, and 900.

Specifically, the reception portion power supply line LP, as shown in Fig. 7, is connected to the communication portion 101 of the slave station 100 and to one input terminal of the AND gate circuit 421 of the slave station 400. In addition, the power supply control line LC from the communication portion 101 is connected to the other input terminal of the AND gate circuit 421. The output terminal of the AND gate circuit 421 is connected to the reception portion 410 and drive position 420. In addition, the communication portion 101 is connected to the key switch 108 for starting the engine. When the key switch 108 is turned on, the logic value of 1 is outputted to the power supply control line LC.

Hence, when the key switch 108 is turned on, power is supplied to the reception portion 410 and AND gate circuit 421.

In a case where communication error occurs during vehicle operation, the logic value of 1 is output from the error terminal ERR of the reception portion 410, as described above, the head lamp 403 is forcibly turned on via the driving portion 420.

If the key switch 108 is turned off with the driving of the vehicle ended, communication error may still occur if electronic apparatus is operated. If communication error occurs under these conditions, the logic value 0 is output from the communication portion 101 to the power supply control line LC. Thus, since the logic value of 0 is output from the AND gate circuit 421, the power supply to the reception portion 410 and driving portion 420 is halted, and the head lamp 403 is turned off.

It is noted that the internal structure of the communication portion 401 shown in Fig. 7 is the same as the communication portions 301, 801, and 901. Hence, in a case where the key switch 108 is turned off with the small lamp 302, head lamp 303, tail lamps 802, 902, and licence lamps 804, 904 turned on due to the occurrence of a communication error, the power supply to these terminals is also stopped. Therefore, power consumption of the battery can be reduced.

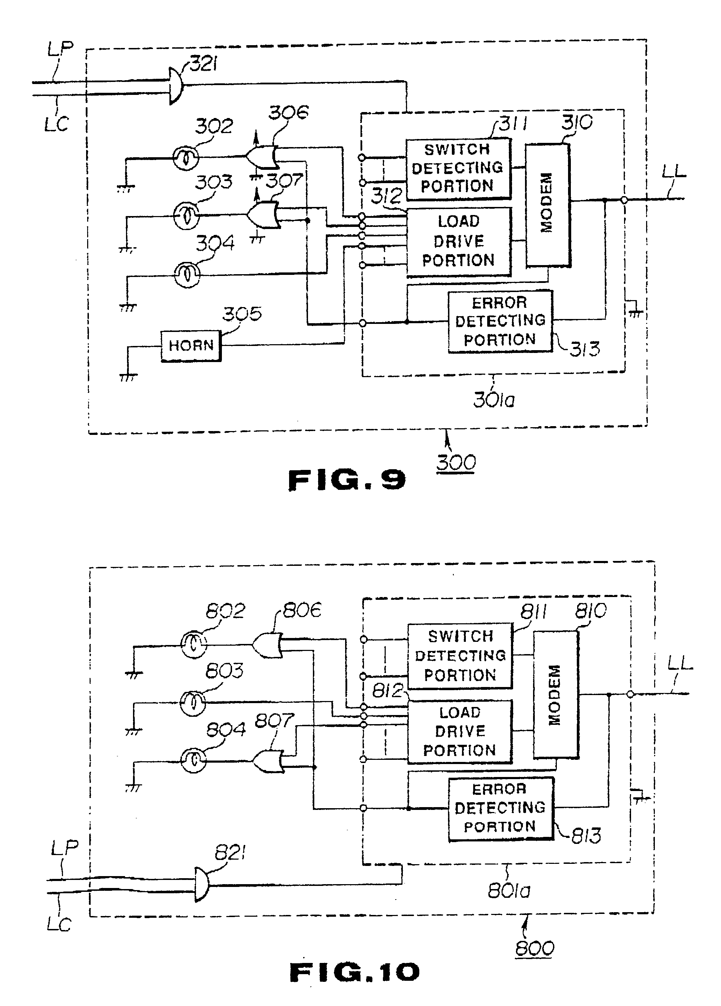

Fig. 9 shows a structure of a slave station 300 according to a fourth preferred embodiment of the invention.

The reception portion power supply line LP is connected to the other input terminal of the AND gate circuit 321 and the power supply control line LC is connected to the other input terminal of the AND gate circuit 321. The output terminal of the AND gate circuit 321 is connected to a communication circuit 301a.

The communication circuit 301a includes a modem portion 310 for modulating or demodulating the data bits together with monitoring of the address information, a switch detecting portion 311 for detecting an operation state of the operation portion, a load driving portion 312 for driving the corresponding terminal, and an abnormal state detecting portion 313 for detecting communication error when executing parity checking of received information. When the abnormal state detecting portion 313 detects a communication error, a detection signal of the logic vlaue 1 is output to the demodulation portion 310, and OR gate circuits 306, 307. At the same time when the abnormal state detecting portion 313 turns on the small lamp 302 via the OR gate circuit 306, the head lamp 303 is forcibly turned on via the OR gate circuit 307.

In addition, when a detection signal of the logic value of 1 is input from the abnormal state detecting portion 313, the modem portion 310 outputs a halt signal to the load driving portion 312. The load drive portion 312 outputs a halt signal of the logic value of 0 to the OR gate circuits 306, 307, turn signal lamp 304. Hence, the turn signal lamp 304 is held in the off state. In addition, both small lamp 302 and head lamp 303 are held i the ON state in response to the detection signal of the logic value of 1 from the abnormal state detecting portion 313.

When the key switch 108 is turned off in such a state as described above, the signal logic value of 0 is supplied to the input terminal of the AND gate circuit 321 via the power supply control line LC. The power supply to the communication circuit 301a is halted and both small lamp 302 and head lamp 303 are turned off.

The internal structure of the slave station 300 shown in Fig. 9 is the same as that of the slave station 400.

Fig. 10 shows the internal structure of a fifth preferred embodiment of the slave station 800.

The reception portion power supply line LP is connected to the one input terminal of the AND gate circuit 821. The power supply control line LC is connected to the other input terminal of the AND gate circuit 821. The output terminal of the AND gate circuit 821 is connected to the communication cirucit 801a.

The communication circuit 801a includes modem portion 810 for monitoring address information and modulating data bits, a switch detecting portion 811 for detecting the operation state of the operation portion, a load driving portion 812 for driving the terminal, and abnormal state detecting portion 813 for detecting communication error when executing parity checking of the input information.

When a communciation error is detected by the abnormal state detecting portion 813, a detection signal of the logic value of 1 is output to the modem portion 810 and OR gate circuits 806, 807. Therefore, at the same time the abnormal state detecting circuit 813 forcibly turns on the tail lamp 802 via the OR gate circuit 806, the licence lamp 804 is forcibly turned on via the OR gate circuit 807.

When the detection signal of the logic value of 1 is input from the abnormal state detecting portion 813, the modem portion 810 outputs a halt signal to the load driving portion 812. The load driving portion 812 outputs the halt signal of the logic value 0 to the OR gate circuits 806, 807 and the turn signal lamp 803. Hence, the turn signal lamp 803 is held in the OFF state. In addition, the tail lamp 802 and licence lamp 804 are held in the ON state.

When the vehicle driving is ended and the key switch 108 is turned off, the logic value of 0 is supplied to the input terminal of the AND gate circuit 821 via the power supply control line LC. The power supply to the communication circuit 801a is halted so that the tail lamp 802 and licence lamp 804 are extinguished. The internal structure of the slave station 800 shown in Fig. 10 is the same as that of the slave station 900.

As described above, when the key switch 108 is turned off monitoring the operation state of the key switch 108, the head lamp and small lamp which have forcibly been turned on are extinguished. Therefore, the power consumption of the battery can be reduced.

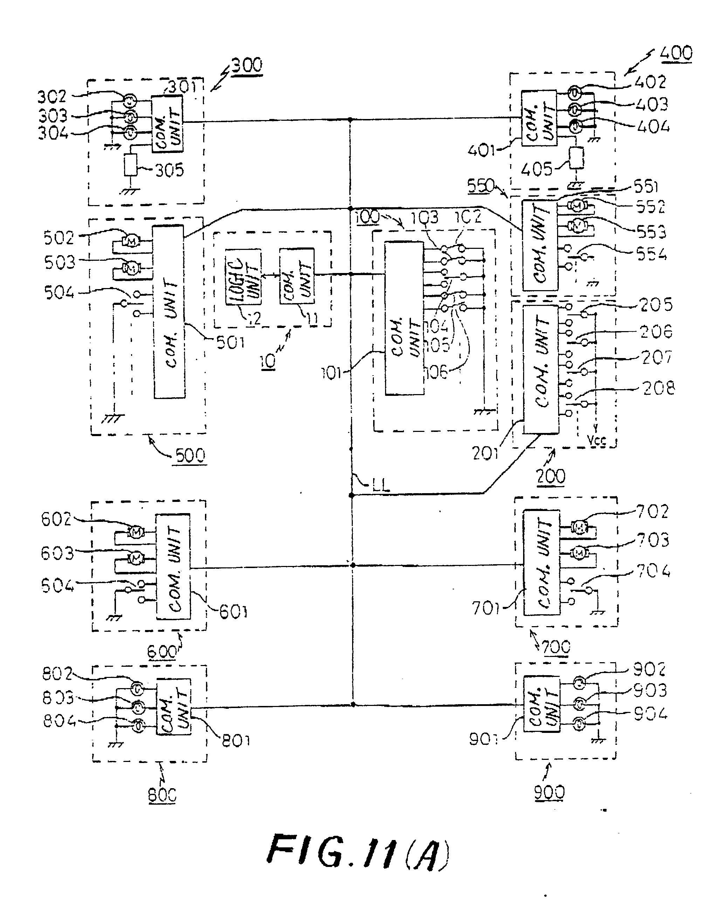

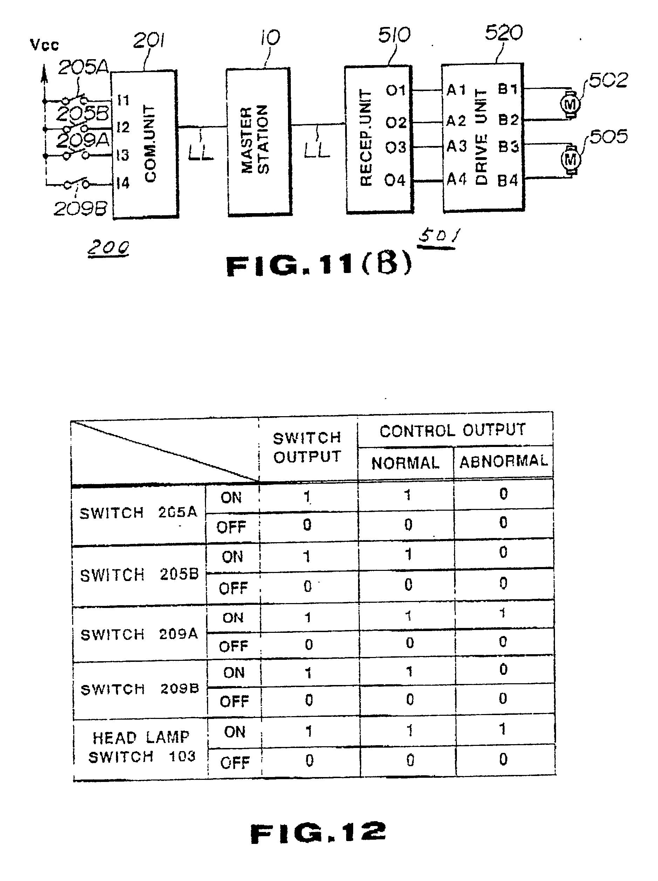

Fig. 11 (A) and Fig. 11 (B) show an internal structure of a fifth preferred embodiment of a system for communicating data between master and slave station utilizing time division multiplexing with failsafe provision according to the present invention.

It is noted that the logic portion 12 of the master station 10 is provided with detecting means for detecting an unsteady state of operation portions having high priority from among the plurality of operation portions.

In addition, one of the slave stations 550 is arranged on a door disposed on the driver's side. The slave station 550 includes a communication portion 551 to communicate with the master station 10, a plurality of terminals disposed on a door located on the driver's side and corresponding operation portions. The plurality of terminals include a power window motor 55 and a motor 553 for driving a door lock system, these being connected to the communication portion 551. The corresponding operation portions include a switch 554 for operatively driving the power window motor 552, the switch 554 being connected to the communication portion 551.

The structues of the slave stations 200 and 500 will be described with reference to Fig. 11 (B).

The communication portion 201 is connected to a plurality of operation portions. That is to say, the switch 205A to raise the power window on the passenger side is connected to the input terminal 11 of the communication portion 201. A switch 205B for operatively lowering the power window on the passenger's side is connected to the input terminal 12 of the communication portion 201. The switch 205 is therefore constituted by switch 205A and switch 205B.

A switch 209A for extending door mirrors installed at both sides of the vehicle from a retracted state is connected to an input terminal I3 and a switch 209B for operatively retracting the door mirror is connected to an input terminal I4. A predetermined voltage Vcc is provided for the other contacts of their respective switches 205A, 205B, 209A, and 209B. When these switches are turned on, the logic value of 1 is input to the corresponding input terminal. For example, when the switch 205A is turned on as shown in Fig. 12, the logic value of 1 is input to the input terminal 11. In addition, the communication portion 201 transmits the information related to the operation of the operation portion input to these input terminals I1, I2, ---, I4 via the multiplex transmission line LL.

The master station 10 is provided with detecting means for detecting the unsteady state of the operation portion. That is to say, when the information related to the operation of the operation portion is transmitted from the communication portion 201, the master station 10 determines the operating state of each operation portion on the basis of the received information.

In a case where the operation portion is in an ON state continuously for five minutes, for example, the master station 10 determines an unsteady state of the operation portion, the corresponding terminal, as shown in Fig. 12, is halted, or shut down or a control output such as to to forcibly drive the operation portion toward a safest mode is transmitted to the slave station 500. Specifically, when the operating states of a switch 205A or switch 205B are detected to be in the unsteady state, the control output of the logic value of 0 is transmitted to the slave station 500 as shown in Fig. 12. In this way, the driving of the power window motor is stopped and the window remains in it up or down position, depending on whether switch 205A (up) or 205B (down) has been found unstable.

In addition, in a case where the operating state related to the operation of the switch 209A is detected to be unsteady, the control output of the logic value 1 is transmitted to the slave station 500. The pair of door mirrors installed on both sides of the vehicle are held in the state where the door mirrors are extended. Also, if the master station 10 detects that the operating state of the switch 209B is abnormal, the control of the logic value of 0 is transmitted to the slave station 500, as shown in Fig. 12. Thus, the pair of door mirrors installed on both sides of the vehicle are held in a state where the pair of door mirrors are retracted, and the driving of the mirror retracting motor is stopped. In addition, when the master station 10 detects that the operation state related to the ON operation of the head lamp switch 103 is unsteady, the control output of the logic value of 1 is transmitted to the slave station and the head lamp is forcibly held in the ON state.

In Fig. 11 (B), the communication portion 501 includes the reception portion 510 and drive portion 520. The reception portion 510 includes output terminals 01, 02, 03, and 04. The drive portion 520 includes input terminals A1, A2, A3, and A4. The drive portion 520 is provided with the input terminals A1, A2, A3, and A4 to which corresponding output terminals 01 through 04 and input terminals A1 through A4 are connected.

In addition, the drive portion 520 is provided with output terminals B1, B2, B3, and B4. A power window motor 502 for upwardly or downwardly moving the power window installed on the passenger's side is connected between the output terminals B1, B2, B3, and B4.

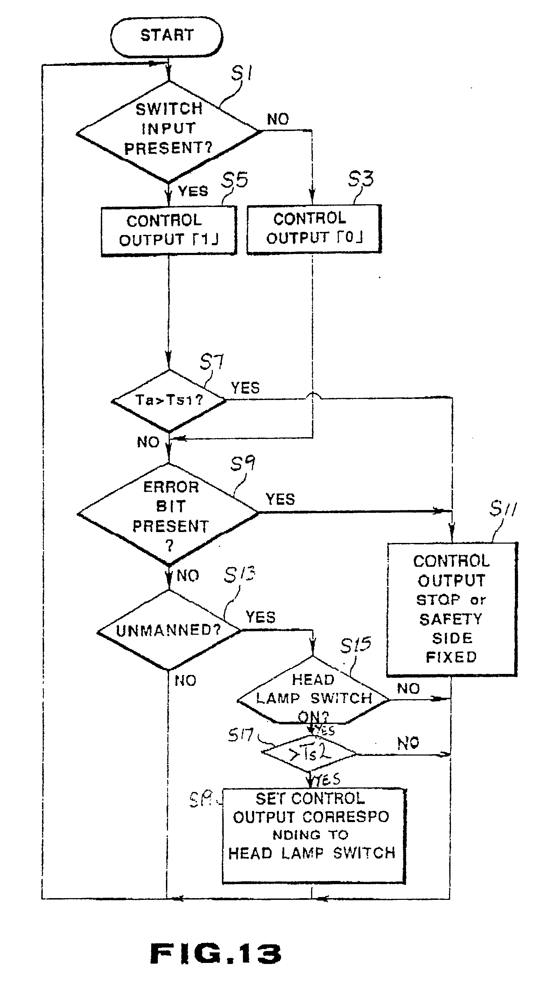

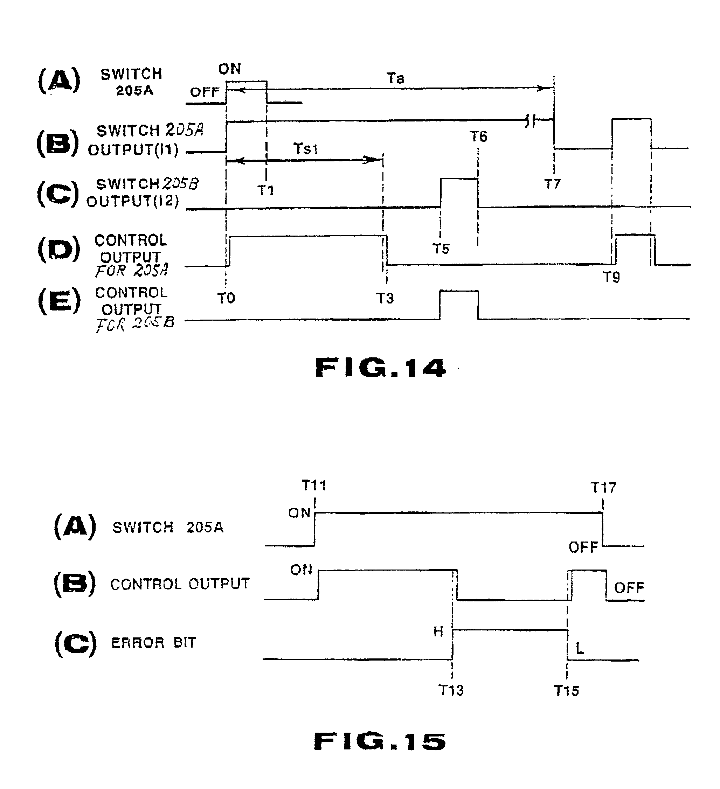

In a case wherein the operating state of the switch 205A is unsteady will be described with reference to Figs. 13 and 14.

First, if the switch is not operated, for example when the vehicle is occupied but a vehicle occupant has not operated the operation portion, as shown in Fig. 13 the routine goes from a step S1 to a step S3. In the step S3, the control output of the logic value of 0, i.e., the drive information equivalent to no operation of the control portion is transmitted at every cycle of the flowchart (3.5 ms). Then, the routine goes from the step S3 to a step S9. Following step S9, since the switch has not been operated, no bit error is present and the routine proceeds to step S13. In this example since the vehicle is occupied the routine returns to start. The routine in the case of an unmanned state of the vehicle will be explained later.

In a case where the switch 205A is turned on during the time from a time T0 to a time T1 (Fig. 14), the routine goes from the step S1 to a step S5 in which the drive information constituted by the logic value of 1 is transmitted to the slave station 500.

HOwever, as shown in Fig. 14(B), in a case where the return of the switch 205A is defective, for example the switch becomes stuck due to dirt on the contacts thereof, even though the switch 205A is operated by the vehicle occupant only during a time from a time T0 to a time T1, the switch remains on and output of the logic value of 1 continues to be input to the input terminal 11 of the communication portion 201, and the routine proceeds to step S7. In step S7, a time Ta, during which the switch output is continued, is compared with a reference time Ts1 previously set. If the time Ta exceeds the reference time Ts1 a control output of the logic value of 0 is transmitted to the slave station 500 to stop the output of the switch.

That is to say, when the switch 205A is turned on as shown in Fig. 14 (D), the control output of the logic value of 1 is transmitted. However, at a time T3 after the reference time Ts1 is elapsed, the control output of the logic value of 0 is forcibly transmitted. Thus, the drive of the window installed on the passenger's side is halted.

If in the above case, the switch 205B (window down) is operated by a vehicle occupant during the time from T5 to T6 (Fig. 14(C)) in order to lower the window, the times T5 and T6 being within a time Ta but being located after the pass of the reference time Ts1. The switch output of the logic value of 1 is supplied to the input terminal 12 of the communication portion 201. In such case, the control output constituted by the logic value of 1 for downwardly moving the window, as shown in Fig. 14 (E), is transmitted to the slave station 500. Therefore, even in a case where the operating state of the switch 205A for upwardly moving the window glass has malfunctioned, or is in an unsteady state, the control output constituted by the logic value of 1 to downwardly move the window glass may be transmitted to the slave station 500, as shown in Fig. 14 (E). In other words, in a a case where the operating state of the switch 205A in order to upwardly move the window is unstable, the switch 205B for lowering the window can still be operated.

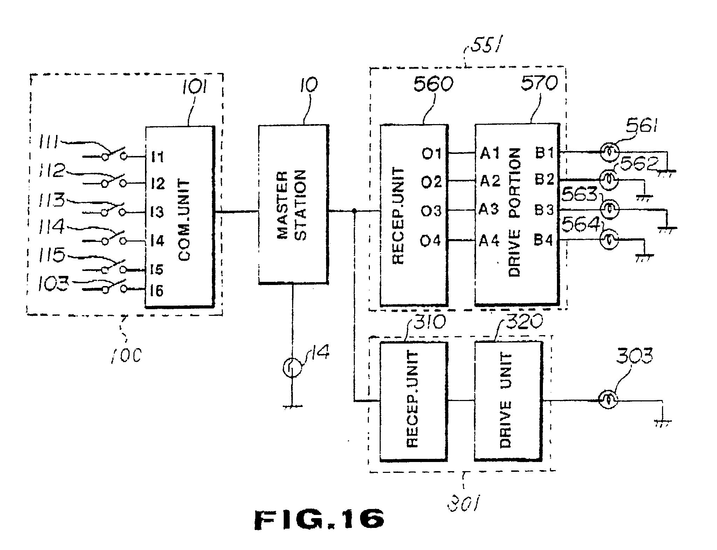

Next, an operation when a communication error occurs will be described below, with reference to Fig. 15.

When the switch 205A is turned on at a time T0, as shown in Fig. 15 (A), the routine goes from a step S1 of Fig. 13 to a step S5. The information constituted by the control output of the logic value of 1, i.e., the data bit corresponding to the switch 205A is transmitted to the slave station 500. In a step S7, the time Ta for which the switch output of the switch 205A is continued is counted. When the counted time Ta is below the reference time Ts1, the routine goes to a step S9. In a step S9 a parity check is conducted according to the data format shown in Fig. 2, if an error bit is present the routine proceeds to a step S11, the control output of the logic value of 0 as shown in Fig. 15 (B) is transmitted to the slave station 500 and drive of the window glass installed on the passenger's side is halted. If, following the step S9, no bit error is present the routine proceeds to step S13. The routine in the case of an unmanned state of the vehicle will be explained later.

Next, a sixth preferred embodiment of a time division multiplex transmission system will be described with reference to Fig. 16.

Fig. 16 shows the master station 10 and slave stations 100, 550, 300 connected to the master station 10.

A plurality of operation portions are connected to the communication portion 101 of the slave station 100. The plurality of operation portions include the key switch 111, door switch 112, parking switch 113, inhibitor switch 114, brake switch 115, and head lamp switch 103 which are connected to the input terminals I1, I2, I3, I4, I5, and I6.

In addition, the master station 10 is connected with the vehicle speed sensor 14. The vehicle speed sensor 14 is constituted by a sensor for detecting whether the running speed of the vehicle is above the predetermined speed, e.g. 20 Km/H.

The communication portion 551 is formed with the reception portion 560 and drive portion 570. The reception portion 560 includes output terminals O1, O2, O3, and O4 and the drive portion 570 includes input terminals A1, A2, A3, A4. The output terminals O1 through O4 correspond to these input terminals A1 through A4 and are mutually connected. The drive portion 570 includes output terminals B1, B2, B3, and B4. The output terminal B1 is connected to a cabin lamp 561 to illuminate the vehicle compartment. The output terminal B2 is connected to a spot lamp 562 locally illuminating the area of the driver's seat. In addition, the output terminal B3 is connected to a step lamp 563 installed on a door. Output terminal B4 is connected to a trunk lamp 564 to illuminate the trunk compartment.

In addition, a communication portion 301 is formed with the reception portion 310 and a driving portion 320 connected to the reception portion 310. The drive portion 320 is connected to a head lamp 303 arranged on a front left side of the vehicle.

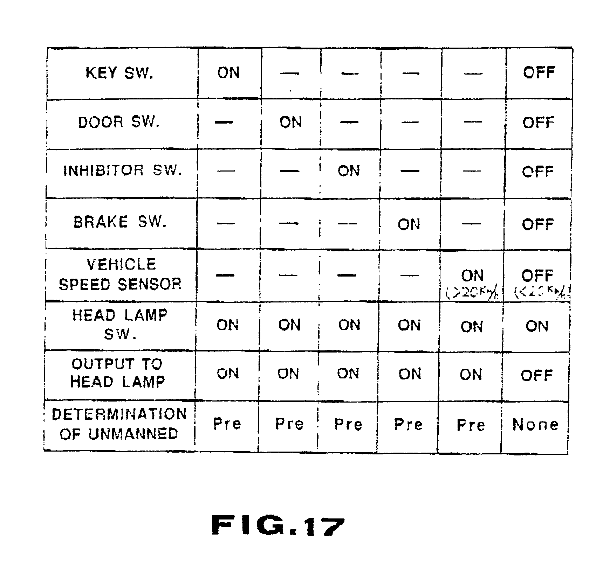

The master station 10 is provided with determining means for determining whether the vehicle is unmanned on the basis of information related to the operation of the various operation portions transmitted from the communication portion 101 and information related to the vehicle speed sensor 14. Specifically, the determining means determines that it is unmanned when each of the key switch 111, door switch 112, inhibitor switch 114, and brake switch 115 are turned off and the vehicle speed sensor 14 indicates 0 as shown in Fig. 17.

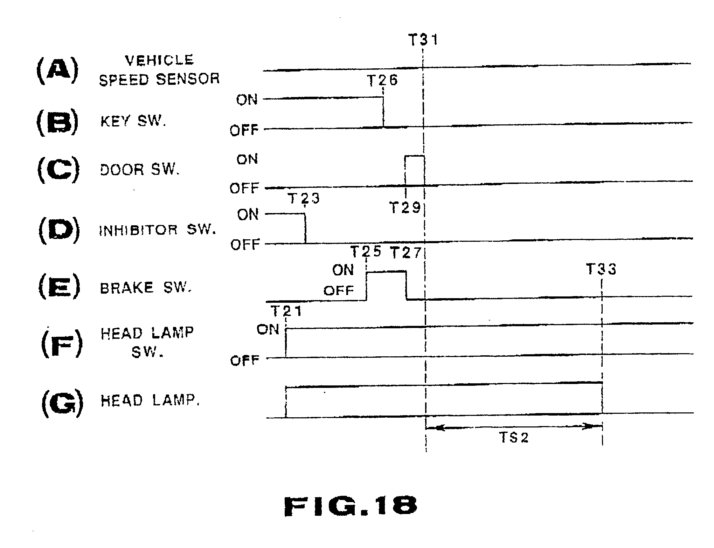

Operation will be described with reference to Fig. 18.

As shown in Fig. 18 (F), when the head lamp switch 103 is turned on at a time T21, the head lamps 303 and 403 are illuminated as shown in Fig. 18 (G) on the basis of the control output from the master station 10.

Next, as shown in Fig. 18 (D), the inhibitor switch 114 is turned off at a time T23 and a brake operation is carried out in order to stop the vehicle after at a time T25, the brake operation ending at a time T27. As shown in Fig. 18 (C), the door switch 112 is turned on at the time T29 and is subsequently turned off at a time of T31 as shown in Fig. 18 (C).

As described above, the determining means determines, at a time T31, that the information from the vehicle speed sensor 14 indicates 20 km/h or below and each of the key switch 111, door switch 112, inhibitor switch 114, and brake switch 115 are respectively turned off.

When the determining means determines that the vehicle is umnanned in a step S13 shown in Fig. 5, the routine goes to a step S15 in which the determining means determines whether the head lamp switch 103 is turned on. If yes, the routine goes to a step S17. In a step S17, the data bit corresponding to the head lamp switch 103 is set to the logic value of 0 at the time T33 which is the elapsed time from the time T31 of a predetermined reference time Ts2 after the unmanned state has been determined. If the headlamp switch remains on longer than the reference time Ts2, the routine goes to a step S19 and the forced output of the logic value of 0 is transmitted to the slave stations 300 and 400. The head lamps 303 and 403 arranged on the slave stations 300 and 400 are extinguished.

It is noted that, in the preferred embodiment shown in Fig. 10, when the determining means determines that the master station 10 is unmanned state, if it is determined that the driver has forgotten to turn off the headlamps, the headlamps are extinguished. According to the present invention, more than just the headlamp terminals may be so controlled, for example, the room lamp 561, spot lamp 562, step lamp 563, and trunk room lamp 564 can also forcibly be extinguished. Therefore, the power consumption of the battery can remarkably be reduced.

It will be further noted that program steps which do not apply for a particular slave station will be ignored by that station while the program is running.

It will fully be appreciate by those skilled in the art that the foregoing description is made in terms of the preferred embodiments and various changes and modifications may be made without departing from the scope of the present invention which is to be defined by the appended claims.

## Claims

1. A time division multiplex transmitting system, comprising:
   a) a master station for sequentially acccessing a plurality of slave stations, each slave station having a transmitting/receiving portion, at least one operation portion and a plurality of terminals and for transmitting a required information to any of the slave stations on the basis of the information received from one accessed station;
   b) a transmission line connected between the master station and the plurality of slave stations for transmitting the information between the master station and slave stations;
   c) first means for detecting a communication error occurring during the communication between one of the slave stations and the master station; and

   d) second means for providing a fail safe structure for the system so as to provide a desired operation for the accessed slave station when the communication error occurs.

2. A time division multiplexing system as set forth in Claim 1, wherein the first means is provided in each slave station and detects the communication failure on the basis of a check result of whether a number of bits included the information transmitted from the master station is odd or even (including zero).

3. A time division multiplexing system as set forth in claim 2, wherein the second means includes third means for providing a bit information to force a terminal to operate in a desired mode in response to detection of the communication error.

4. A time division multiplexing system as set forth in claim 3, wherein the second means includes fourth means, connected between a power supply and the plurality of slave stations, for operatively interrupting the power supply to the slave stations.

5. A time division multiplexing system as set forth in claim 4, wherein the second means includes fifth means for monitoring an operating state of a key switch and for forcibly turning off terminals which have been turned on when the fifth means determines that the key switch tuned OFF.

6. A time division multiplexing system as set forth in claim 2, wherein the first means is installed within a reception portion of a first slave station which is provided with the plurality of terminals, the reception portion being connected to a communication portion of a second slave station having a plurality of operation portions, the operations thereof being related to commands to perform predetermined operations for the corresponding terminals, an error terminal of the reception portion outputting a predetermined logic signal when the information transmitted from the master station indicating the command falls in the communication error.

7. A time division multiplexing system as set forth in claim 6, wherein the second means includes OR gate circuit connected to the error terminal for passing the predetermined logic signal and a driving portion for driving the corresponding terminal in response to the predetermined logic signal from the OR gate circuit.

8. A time division multiplexing system as set forth in claim 7, wherein the system is applied to an automotive vehicle and wherein the terminals provided within the second slave station includes a small lamp, a head lamp, and a horn, the horn being installed so that when the predetermined logic signal is received from the error signal, the horn is de-energized.

9. A time division multiplexing system as set forth in claim 4, wherein the fourth means includes a fuse connected to the power supply; a first power supply transmission line connected between the fuse, the master station, and the plurality of slave stations which are provided with communication portions and operation portions; a switch connected to the fuse; and second power supply transmission line connected between the fuse and the plurality of slave stations which are provided with reception portions for receiving the information transmitted from the master station via the transmission line to a plurality of terminals having high priorities.

10. A time division multiplexing system as set forth in claim 9, wherein the system is applied to an automotive vehicle, and the plurality of terminals having high priorities include head lamps, small lamps, tail lamps, and licence lamps which may be forcibly turned on when communication failure occurs, and wherein the power supply to the plurality of slave stations which are provided with the head lamps, small lamps, tail lamps, and licence lamps maybe interrupted by means of the switch operated by a vehicle occupant.

11. A time division multiplexing system as set forth in claim 4, wherein each of the plurality of slave stations include a communication portion connected to the transmission line and a plurality of operation portions, the operation portion including a key switch for operatively starting an engine of a vehicle and the communication portion transmitting a predetermined logic signal therefrom to another transmission line, a power supply line being connected between a vehicular battery and each slave station, the other transmission line being connected to one of the plurality of slave stations having the plurality of terminals and a driving portion therefor via an AND gate whose other input end is connected to the power supply line and wherein, when the key switch is turned off, the power supply to the receiving portion and the driving portion is interrupted via the AND gate circuit.

12. A time division multiplexing system as set forth in claim 11, wherein the communication portion of one of the slave stations includes a modem portion for modulating or demodulating address information constituted by a predetermined number of bits derived from the transmission line, a switch detecting portion for detecting operating states of switches constituting the operation portions, a load driving portion for driving the corresponding terminals, and the first means and wherein when the first means detects the communication failure, the first means outputs a predetermined logic signal to the modem portion, one of two OR gate circuits so that the first means forces a small lamp of one of the terminals via the one OR gate circuit to turn on and forces a head lamp to turn on via the other OR gate circuit.

13. A time division multiplexing system as set forth in claim 12, wherein when the modem portion receives the detection signal from the first means, a halt signal is transmitted to the load driving portion and the load driving portion outputs the halt signal to two OR gate circuits, turn signal lamp, and horn, thus the turn signal lamp and horn being held in an off state and both small lamp and head lamp are held in the off state, with the small and head lamps held in an on state in response to the detection of the first means and wherein when the key switch is operated to turn off, the detection signal having a predetermined logic value is transmitted from the first means so that the head lamp and small lamps are held in the on state.

14. A time division multiplexing communiciating system as set forth in claim 1, wherein the first means includes third means for detecting an unsteady state of the operation portions having high priorities such that a long operation of one of the operation portions causes a power supply to the corresponding terminal to be terminated.

15. A time division multiplexing communication system as set forth in claim 14, wherein the system is applied to an automotive vehicle and wherein the third means detects the unsteady state when detecting that a predetermined operation portion is in a state equal to a state in which the operation portion is turned on over a predetermined time.

16. A time division multiplexing communciation system as set forth in claim 15, wherein the second means turns off the corresponding terminal when the third means detects the unsteady state of the predetermined operation portion.

17. A time division multiplexing communication system as set forth in claim 15, wherein the second means transmits a control output to one of the slave stations having the corresponding terminal to drive the corresponding terminal to a safest position.

18. A time division multiplexing communication system as set forth in claim 16, wherein when the third means detects the unsteady state of a power window operation portion, the third means outputs the halt signal having a predetermined logic value to the slave station having a corresponding power window terminal so that upward or downward movement of the window is halted.

19. A time division multiplexing communication system as set forth in claim 17, wherein when the third means detects the unsteady state of a mirror operation portion, the third means transmits the control signal to the slave station having the terminal corresponding to a pair of door mirrors so that the pair of door mirrors of are held in an extended state.

20. A time division multiplexing communciation system as set forth in claim 17, wherein when the third means detects the unsteady state of a mirror operation portion, the third means transmits the control signal to the slave station having the terminal corresponding to the pair of door mirrors so that the pair of door mirrors of are held in a folded state.

21. A time division multiplexing communication system as set forth in claim 20, which further includes fourth means for detecting an unmanned state in the vehicle in which the second means forcibly turns off the terminals which have are turned on when the fourth means detects the unmanned state in the vehicle.

22. A time division multiplexing communication system, comprising:

a) A master station for sequentially accessing a plurality of slave stations, each slave station having a data transmitting/receiving portion, at least one operation portion and a plurality of terminals and for transmitting a required data to another accessed slave station on the basis of the data received from one accessed slave station;

b) a data transmission line connected between the master station and the plurality of slave stations for providing the data transmission path between the master station and the slave stations;

c) first means for detecting at least one erroneous operation in one of the operation portions arranged in a particular slave station and transmission error which occurs data transmission via the data transmission line; and

d) second means for causing the terminals of the accessed slave station which carry out desired operations in reponse to the operations of the operation portions to be halted or to be operated so as to be fixed in a safest mode for at least one of the erroneous operation.

23. A time division multiplexing communication system as set forth in claim 22, wherein the first means and second means are incorporated into the master station and when the first means detects an abnormality in operation of one of the operation portions or detects an abnormality in the data indicating a command to perform the desired operation in response to the operation of the operation portion which correspond to the terminal of the accessed slave station, the master station transmits an abnormality indicating signal to the reception portion of the particular slave station for having the terminal corresponding to the operation portion which has the abnormality halt the operation or be fixed in a safest mode.

24. A time division multiplexing communication system as set forth in claim 23, wherein the master station monitors a switch signal derived from a switch portion constituting the particular operation portion and detects the abonormality in operation when the switch signal continues over a predetermined period of time.

25. A timne division multiplexing communication system as set forth in claim 23, wherein the master station monitors a number of bits constituting the data derived from the transmitting portion of the particular slave station and detects data transmission error when the number of bits constituting the data does not have a predetermined number.

26. A time division multiplexing communication system as set forth in claim 24, wherein the operation portion of the particular slave station is constituted by a power window switch which produces a command indicating an upward movement of a power window when turned on, the power window constituting the terminal corresponding to the power window switch and being halted when a corresponding drive portion receives the abnormality indicating signal.

27. A time division multiplexing system as set forth in c;aim 24, wherein the operation portion of the particular slave station is constituted by a door mirror extend switch which produces a command indicating the corresponding door mirror is to be extended and the corresponding door mirror being held in the extended state in response to the abnormality indicating signal.

28. A time division multiplexing communication system as set forth in claim 24, wherein the operation portion of the particular slave station is constituted by a door mirror fold switch which produces a signal indicating the corresponding door mirror to be folded and the door mirror terminal of the particualr slave station controls the door mirror to the extended state in response to the abnormality indicating signal.

29. A time division multiplexing communication system as set forth in claim 22, wherein the first means and second means are incorporated in the receiving portion of a particular slave station, the particular slave station receiving data indicating the operating states of the operation portions of another accessed slave station from the master station and detecting a presence of abnormality in the data, and wherein the second means transmits an error signal to a driving portion for driving the plurality of the terminals of the particular slave station so that the corresponding terminals cause the operating portions to be fixed at safest modes.

30. A time division multiplexing communciation system as set forth in claim 29, wherein the first means carries out a parity check of the recevied data.

31. A time division multiplexing communication system as set forth in claim 30, wherein the terminals of the particular slave station include head lamps of a vehicle, power windows thereof, and horn thereof and wherein the head lamps are fixed in on states, the power windows are fixed in down states and the horn is fixed in an off state when the error signal is received by the driving portion.

32. A time division multiplexing communication system as set forth in claim 31, which further includes a power supply line connected between a vehicular battery, the reception portion, and the driving portion of the particular slave station and a power switch connected between the battery and power supply line so that wasteful power consumption of the battery may be prevented when the head lamps and the power windows are fixed in the turn on states.

33. A time division multiplexing communication system as set forth in claim 33, which further includes a power supply control line connected between the transmitting portion of the other slave station and the reception portion of the particular slave station and an AND gate circuit installed in the particular slave station, the other slave station having the operation portion constituted by an ignition key switch of the vehicle and the transmitting portion, the transmitting portion transmitting a logic "0" signal to the power supply control line when the key switch is turned off so that the power suoply to the reception portion of the particualr slave station is interrupted.

34. A time division multiplexing system as set forth in claim 22, wherein both first and second means are incorporated in the master station, the first means includes third means for monitoring the operating states of the plurality of operation portions of a particular slave station and detecting whether a vehicle is in an unmanned state from the monitored operating states of the operation portions, and when the terminals which carry out desired operations according to the operating states of the operation portions of the particular slave station and which are directly connected to a power supply are left in operating states after the master station detects the unmanned state of the vehicle, the master station transmits a halt signal to the terminals of the particular slave station to halt the operation of the terminals so that wasteful power is prevented.

35. A time division multiplexing communication system as set forth in claim 34, wherein the master station detects the unmanned state from off states of an engine key switch, door switch, inhibitor switch, brake switch, and vehicle speed sensing switch.

36. A time division multiplexing communication system as set forth in claim 35, wherein the terminals which are directly connected to the power supply correspond to a room lamp installed in a vehicle compartment of the vehicle.

37. A method for communicating data between a plurality of data stations in a time division multiplexing mode, comprising the steps of:

a) sequentially acccessing a plurality of slave stations, each slave station having a transmitting/receiving portion, at least one operation portion and a plurality of terminals and for transmitting a required information to any of the slave stations on the basis of the information received from one accessed station;

b) transmitting the information between the master station and slave stations;

c) detecting a communication failure as an error in communication occurred during communication of information between the slave station and the master station; and

d) providing a failsafe structure for the system so as to provide a desired operation for the accesed slave station when the communication error occurs.

**FIG.1**

FIG.2

**FIG. 3**

| | | In | On | An(=Bn) ERR=0 | An(=Bn) ERR=1 |
|---|---|---|---|---|---|
| SMALL LAMP SWITCH(n=1) | ON | 0 | 1 | 1 | 1 |
| | OFF | 1 | 0 | 0 | 1 |
| HEAD LAMP SWITCH(n=3) | ON | 0 | 1 | 1 | 1 |
| | OFF | 1 | 0 | 0 | 1 |
| HORN SWITCH(n=4) | ON | 0 | 1 | 1 | 0 |
| | OFF | 1 | 0 | 0 | 0 |

**FIG. 4**

FIG.5

FIG.7

**FIG. 6**

FIG.8

**FIG. 9** 300

**FIG.10** 800

# FIG.11(A)

Vcc

205A

205B

209A

201

COM.UNIT

I1

I2

I3

I4

209B

200

10

MASTER STATION

LL

510

RECEP.UNIT

O1

O2

O3

O4

LL

520

A1  DRIVE UNIT  B1

A2            B2

A3            B3

A4            B4

502 M

505 M

501

## FIG.11(B)

| | | SWITCH OUTPUT | CONTROL OUTPUT | |
|---|---|---|---|---|
| | | | NORMAL | ABNORMAL |
| SWITCH 205A | ON | 1 | 1 | 0 |
| | OFF | 0 | 0 | 0 |
| SWITCH 205B | ON | 1 | 1 | 0 |
| | OFF | 0 | 0 | 0 |
| SWITCH 209A | ON | 1 | 1 | 1 |
| | OFF | 0 | 0 | 0 |
| SWITCH 209B | ON | 1 | 1 | 0 |
| | OFF | 0 | 0 | 0 |
| HEAD LAMP SWITCH 103 | ON | 1 | 1 | 1 |
| | OFF | 0 | 0 | 0 |

## FIG.12

**FIG.13**

**FIG.14**

**FIG.15**

**FIG.16**

| KEY SW. | ON | — | — | — | — | OFF |
|---|---|---|---|---|---|---|
| DOOR SW. | — | ON | — | — | — | OFF |
| INHIBITOR SW. | — | — | ON | — | — | OFF |
| BRAKE SW. | — | — | — | ON | — | OFF |
| VEHICLE SPEED SENSOR | — | — | — | — | ON (>20K/h) | OFF (<20K/h) |
| HEAD LAMP SW. | ON | ON | ON | ON | ON | ON |
| OUTPUT TO HEAD LAMP | ON | ON | ON | ON | ON | OFF |
| DETERMINATION OF UNMANNED | Pre | Pre | Pre | Pre | Pre | None |

# FIG.17

**FIG.18**